# EUROPEAN PATENT SPECIFICATION

(11) **EP 0 659 511 B1**
(45) Date of publication and mention of the grant of the patent: **01.04.1998**
(21) Application number: 94203686.4
(22) Date of filing: 20.12.1994
(51) Int. Cl.: B23C 5/26, B23B 31/11, B23Q 16/08

(54) **Tool system**
Werkzeugsystem
Système d'outil

(30) Priority: 23.12.1993 DK 144293
(43) Date of publication of application: 28.06.1995
(73) Proprietor: Gransgaard, Kristian, DK-7620 Lemvig (DK)
(72) Inventor: Gransgaard, Kristian, DK-7620 Lemvig (DK)
(74) Representative: Larsen, Hans Ole

(56) References cited:
- WO-A-92/21471
- CH-A- 641 990
- DE-B- 2 328 176
- DE-U- 8 906 184
- FR-A- 1 007 956
- GB-A- 2 127 333

## Description

### BACKGROUND OF THE INVENTION

The invention relates to a tool system for machine tools and comprises an intermediate piece, a first end of which has a cylindrical shank which can be centred in the machine's tool holder and can be secured herein by means of at least one conical screw directed laterally relative to said holder, which screw can engage a conical hole in the intermediate piece, said intermediate piece being provided with a screw connection oriented in the axis of rotation of the machine for the fastening of a milling tool.

Such a tool system is known from DE-B 2,328,176, where a milling tool is fastened with a threaded pin and with transverse key secured by screws, said key contributing to transmitting torque to the milling tool. Here, the intermediate piece serves merely as a power transmission means, when the milling tool directly abuts against the surface-ground underside of the holder.

The disadvantage of the above-mentioned method for securing milling tools is that the tool must have a length corresponding to the desired milling depth from the uppermost surface of the workpiece. Often, only the end part of the milling tool is utilized, which is quickly worn, and which as with a tool with integrated cutting edges as on HSS milling tools necessitates the changing of the whole tool, even though most of the cutting part of the tool is intact and usable. The use of long-shanked milling tools is a relatively expensive solution due to the cost of material, and also makes it necessary to have tools with different shank lengths in order to accommodate the need for short and herewith more rigid milling tools.

From DE-A 2,831,660 there is known a tool system for a machine tool with an adapter which serves as intermediate piece between the holder and various cutting tools, including milling tools. However, this system is aimed only at creating an easy replacement between different tools and does not solve the problem of the wearing-down of tools used for the machining of areas deep down in the workpiece, because the various adapters proposed as intermediate pieces are not designed to increase the working depth of the tool and are wider than the tools. Conseqently, they cannot be used for the machining of deep-lying and narrow areas. Centring between adapters and milling tools is achieved with cylindrical fits.

In US-A 5,259,709 there is described a thread-cutting tool that possibly may be rotated during the machining of workpieces. The tool's threading tool is secured with an elongated intermediate piece and a through-going screw on a holder. In order to transfer the torque along the longitudinal axis, and to achieve a certain axial alignment between threading tool and intermediate piece, the assembly is provided with rectangular, fitting ground surfaces as in a key-and-keyway connection. However, the described key-and-keyway connection is found to be placed only in one direction transversely to the longitudinal axis, and thus there is not created a precise centring of the threading tool relative to the intermediate piece. When dismounting and mounting of the threading tool, it is not possible to achieve a repetitional accuracy of the position of the threading tool relative to a direction at right-angles to the above-mentioned first direction transversely to the longitudinal axis. In order to achieve sufficient coaxiality between screw and holder, this publication also describes the use of cylindrical fitting surfaces on the screw and the holding means respectively.

### EXPLANATION OF THE INVENTION

It is the object of the invention to overcome the disadvantages of the known art, and especially to reduce the costs during use and to reduce the time required to change worn milling cutters when only a relatively short piece of the cutter's length is utilized in the machining process. Moreover, it is a further object to present a connection between an intermediate piece and a milling tool which obviates the adjustment of the machine tool relative to the workpiece after replacement of the tool, while at the same time the replacement can be effected easily and quickly.

The tool system according to the invention and having the features of claim 1 is peculiar in that the intermediate piece separates the milling cutter from the holder, that it is elongated and has a diameter at the end facing the milling tool which is equal to or less than the diameter of the milling tool. At the end facing the milling tool, the intermediate piece has at least three radially-extending projections wedge-shaped in the axial direction which projections are symmetrically positioned about the axis of rotation. The projections can engage with a corresponding number of axially, wedge-shaped keyways in the one end of the milling tool. The extreme surfaces of the milling tool facing the intermediate piece are in abutment with surfaces on the intermediate piece.

With this configuration of intermediate piece and milling tool, the milling tool can be centred relative to the intermediate piece, and thereby relative to the axis of rotation of the machine tool because of the geometry of the positioning of the three or more symmetrically arranged projections and the precise grinding of these cooperating surfaces. The abutment between the intermediate piece and the outer surfaces of the tool ensures that the tool has the same distance relative to the machine tool.

The wedge shape of projections and keyways makes it easier to change the tool even when a fine fit between projections and keyways is involved. This hereby enables the use of the shortest possible milling tools for a given milling operation without the machine tool having to be re-adjusted relative to the milling table on which the workpieces are clamped. Instead of a series of milling tools, which are only partly worn before being discarded, it is thereby possible to have a set of intermediate pieces of different lengths which can cover most needs in the milling of deep-lying details, and with the use of the shortest possible and thus the cheapest possible tools.

The positioning of the thread of the screw connection in the milling tool, and the dimensioning of the intermediate piece, ensures that the tool system is suitable for the machining of deep-lying and narrow areas in the workpieces.

It is preferred to design the projections and keyways with a wedge angle as disclosed in claim 2. Normally, the wedge angle is distributed symmetrically around a plane which includes the symmetrical axis of the milling tool and the intermediate piece, said axis ideally being coincident with the axis of rotation of the machine tool spindle. The angular deviation will thus be 1-5° from said plane.

An embodiment with a simple to produce number and placement of keyways and projections is disclosed in claim 3 because two keyways and projections can be machined by milling and grinding respectively in one operation.

By providing that end of the intermediate piece facing the milling tool with swarf discharge channels as described in claim 4, the swarf is easier removed when milling and boring with the milling tool at depths which exceed the length of the milling tool, and also when machining areas in the bottom of narrow holes.

By the screw connection between the milling tool and the intermediate piece as disclosed in claim 5, the milling tool may be exchanged using the tightening tool without having to remove the intermediate piece from the holder in the machine tool.

### THE DRAWING

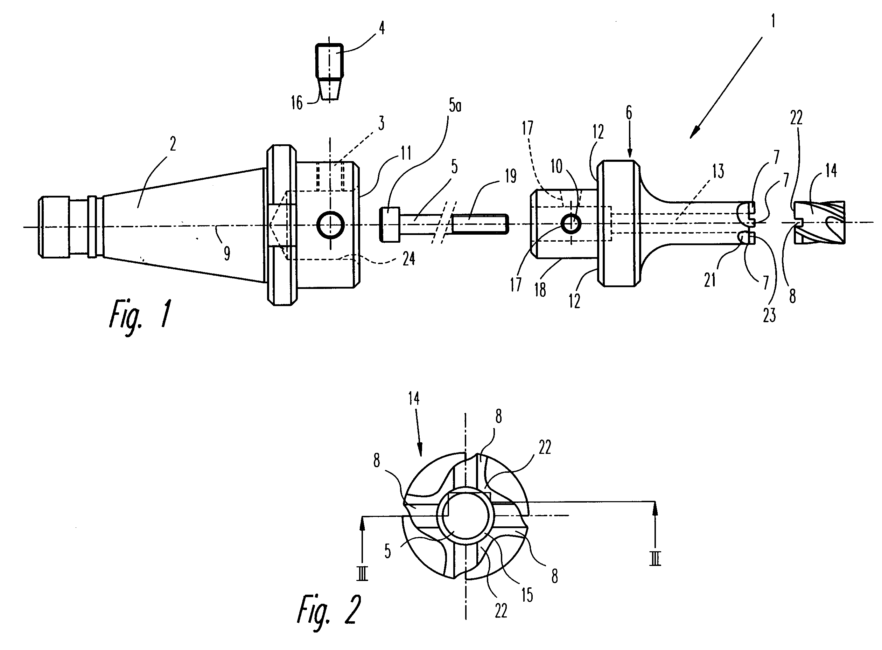

An embodiment of the tool system according to the invention will now be described in more detail with reference to the drawing, where
fig. 1 shows an exploded view of the tool system,
fig. 2 shows a milling tool seen from the end facing the intermediate piece,
fig. 3 shows a section of an enlarged detail of the assembly between tool and intermediate piece, and
fig. 4 shows a second embodiment of the screw connection between intermediate piece and tool.

### DESCRIPTION OF THE EMBODIMENTS

The tool system 1, which is intended for milling operations, comprises a standard holder 2 for mounting in the spindle of a toolroom milling machine and which in itself has a known fastening system for tools etc. The holder 2 has a threaded hole 3 which is oriented perpendicularly to the axis of rotation 9 of the milling machine and the holder. In the hole 3 there is a screw 4 with a conical end which can engage a conical hole 10 in the cylindrical shank 18 of an intermediate piece 6.

When the screw 4 is inserted, the hole 10 is positioned and dimensioned so that the one side 16 of the conical screw 4 lies up against the side 17 of the hole 10, whereby the end surface 11 of the holder 2 and the shoulder 12 on the intermediate piece 6 are drawn mutually together. The intermediate piece 6 is hereby fixed relative to the holder 2 and thus relative to the machine. Because of the cylindrical fitting surfaces 18 and 24 respectively on the intermediate piece 6 and inside of the holder 2, the intermediate piece 6 is centred about the axis of rotation 9.

The intermediate piece 6 is provided with a stepped hole 13 oriented and centred in the axis of rotation 9, and in which there is provided a fastening screw 5 for the milling tool 14. For the purpose of using milling tools of small diameter, the head 5a of the screw is placed in the intermediate piece 6.

At the end facing the milling tool 14, the intermediate piece 6 has a diameter which is less than the diameter of the milling tool 14 in a section which at least corresponds to the desired milling depth.

On the circumference of the end facing the milling tool 14, the intermediate piece 6 has swarf discharge channels 21 situated symmetrically around the axis of rotation 9.

Disposed and centred in the longitudinal direction of the milling tool 14, a threaded bottom hole 15 is provided which corresponds with a thread 19 on the end of the screw 5.

In the end of the intermediate piece 6 facing the milling tool 14 there are some projections 7. In the shown embodiment, these projections are cruciformly placed and oriented perpendicularly to the axis of rotation 9. Moreover, the projections 7 are ground to a slight wedge shape with the narrowest side facing the milling tool 14.

In the end facing the intermediate piece 6, the milling tool 14 has some recesses 8 which, in the shown embodiment, are cruciformly placed and disposed at right-angles out from the axis of rotation 9. The keyways 8 are slightly wedge-shaped with the narrowest side facing the cutting end 20. The orientation and positioning of the keyways 8 correspond to the projections 7 on the intermediate piece.

In a preferred embodiment, the wedge shape of both the key-ways 8 and the projections 7 forms an angle **a** in the range of 2-10° distributed symmetrically about a plane through a symmetry axis for the parts 6 and 14. This symmetry axis aims to coincide with the axis of rotation 9 between top and bottom of the projections 7 and the keyways 8 respectively. The preferred angle a is 6^{o}.

By tightening the screw 5 together with the milling tool 14, the milling tool 14 is centred because the keyways 8 engage the projections 7 and draw the milling tool 14 into the correct position. When tightened, the extreme surface 22 on the tool abuts against surfaces 23 in the intermediate piece 6.

The tool system can thus be separated into all of its parts for the replacement of the milling tool 14, without that the mounting of a new tool with the same nominal dimensions requires an adjustment of the machine tool spindle relative to the items clamped on the machine table. The wedge shape enables easy assembly of the keyways and projections despite the fine tolerances to which the parts are machined. An optimum utilization of the invention is achieved by using a set of intermediate pieces 6 of different lengths.

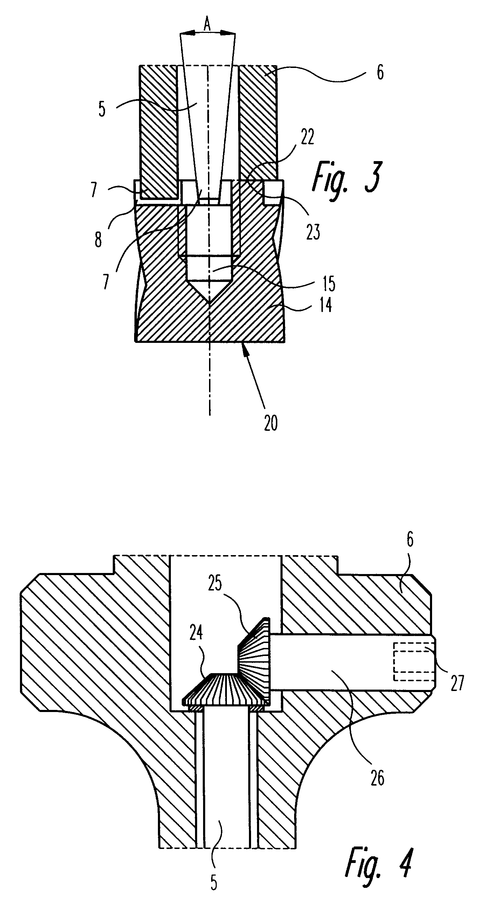

As shown in fig. 4, the screw connection between the intermediate piece and the tool can be configured as an angular drive with two bevel gears 24, 25 which are respectively provided on the head of the screw 5 and on the one end of an axle journal 26. This journal 26 is rotatably mounted in the intermediate piece 6 and is configured with an internal key surface, thus allowing the milling tool to be loosened and fastened with a not-shown tightening tool without requiring any separation of the intermediate piece 6 and the holder 2.

## Claims

1. Tool system (1) for machine tools and comprising an intermediate piece (6), a first end of which has a cylindrical shank (18) which can be centred in the machine's tool holder (2) and can be fastened herein by means of at least one conical screw (4) directed laterally relative to the holder, which screw can engage a conical hole (10) in the intermediate piece (6), said intermediate piece (6) being provided with a screw connection (5) oriented in the axis of rotation of the machine for the fastening of a milling tool (14), **characterized** in that the intermediate piece (6) separates the milling tool (14) from the holder (2), that the intermediate piece (6) is elongated and has a diameter at the end facing the milling tool (14) that is the same as or less than the diameter of the milling tool (14), whereas the end of the intermediate piece (6) facing the milling tool (14) there are at least three radially directed projections (7) wedge-shaped in the axial direction which projections are symmetrically disposed about the axis of rotation (9), and which can engage a corresponding number of axially wedge-shaped keyways (8) in the one end of the milling tool (14), and where the extreme surfaces of the milling tool facing the intermediate piece are in abutment with surfaces on the intermediate piece.

2. Tool system (1) according to claim 1, **characterized** in that the angle between the surfaces which mutually form the wedge shape on the projections on the intermediate piece and in the keyways in the milling tool is in the range of 2 - 10°.

3. Tool system according to claim 1 or 2, **characterized** in that the intermediate piece (6) is provided with four outwardly-extending projections (7) disposed in a cruciform manner, and that the milling tool (14) is provided with a number of cruciformly-disposed keyways (8) which corresponds to the projections (7).

4. Tool system (1) according to any of the claims 1 - 3, **characterized** in that the end of the intermediate piece (6) facing the milling tool (14) is provided with swarf discharge channels which are arranged symmetrically about the axis of rotation (9).

5. Tool system (1) according to any of the claims 1 - 4, **characterized** in that the screw connection (5) between the intermediate piece (6) and the milling tool (14) comprises a screw situated for engaging the milling tool (14), said screw having a head configured as a bevel gear which is or may be engaged with a second bevel gear disposed on a first end of a journal which is rotatably mounted inside the intermediate piece (6), and where the other end of the journal is configured to be operated with a tightening tool.

## Patentansprüche

1. Werkzeugsystem (1) für Werkzeugmaschinen, aufweisend: ein Zwischenstück (6) mit einem ersten Ende, das einen zylindrischen Schaft (18) aufweist, der in dem Werkzeughalter (2) der Maschine zentriert und darin mittels mindestens einer quer zum Halter ausgerichteten Konusschraube (4) befestigt werden kann, wobei die Schraube in ein konisches Loch (10) in dem Zwischenstück (6) eingreifen kann und das Zwischenstück (6) mit einer in der Drehachse der Maschine ausgerichteten Schraubverbindung (5) zur Befestigung eines Fräswerkzeugs (14) versehen ist,
**dadurch gekennzeichnet**, daß das Zwischenstück (6) das Fräswerkzeug (14) von dem Halter (2) trennt, und daß das Zwischenstück (6) länglich ist und an dem dem Fräswerkzeug (14) zugewandten Ende den gleichen oder einen geringeren Durchmesser als das Fräswerkzeug (14) aufweist, wobei an dem dem Fräswerkzeug (14) zugewandten Ende des Zwischenstücks (6) mindestens drei in Axialrichtung keilförmige, radial ausgerichtete Vorsprünge (7) vorgesehen sind, die um die Drehachse (9) herum symmetrisch angeordnet sind und in eine entsprechende Zahl in Axialrichtung keilförmiger Keilnuten (8) in dem einen Ende des Fräswerkzeugs (14) eingreifen können, wobei die dem Zwischenstück zugewandten äußersten Flächen des Fräswerkzeugs an den Flächen des Zwischenstücks anstoßen.

2. System (1) nach Anspruch 1, **dadurch gekennzeichnet**, daß der Winkel der Flächen, die miteinander die Keilform auf den Vorsprüngen am Zwischenstück sowie in den Keilnuten am Fräswerkzeug bilden, im Bereich von 2 - 10° liegt.

3. System nach Anspruch 1 oder 2, **dadurch gekennzeichnet**, daß das Zwischenstück (6) mit vier in Kreuzform angeordneten, nach außen verlaufenden Vorsprüngen (7) versehen ist und daß das Fräswerkzeug (14) mit einer Anzahl an in Kreuzform angeordneten Keilnuten (8) versehen ist, die den Vorsprüngen (7) entsprechen.

4. System (1) nach einem der Ansprüche 1 bis 3, **dadurch gekennzeichnet**, daß das dem Fräswerkzeug (14) zugewandte Ende des Zwischenstücks (6) mit symmetrisch um die Rotationsachse (9) herum angeordneten Spanabfuhrkanälen versehen ist.

5. System (1) nach einem der Ansprüche 1 bis 4, **dadurch gekennzeichnet**, daß die Schraubverbindung (5) zwischen dem Zwischenstück (6) und dem Fräswerkzeug (14) eine zum Eingriff in das Fräswerkzeug (14) angeordnete Schraube mit einem als Kegelrad ausgebildeten Kopf, der mit einem auf einem ersten Ende eines drehbar im Zwischenstück (6) befestigten Achszapfens angeordneten zweiten Kegelrad in Eingriff stehen kann, aufweist, wobei das andere Ende des Achszapfens zur Zusammenwirkung mit einem Spannwerkzeug eingerichtet ist.

## Revendications

1. Système d'outil (1) destiné à des machines-outils et comprenant une pièce intermédiaire (6), dont une première extrémité possède une queue cylindrique (18) qui peut être centrée dans le porte-outil (2) de la machine et peut être fixée dans celui-ci au moyen d'au moins une vis conique (4) dirigée latéralement par rapport au porte-outil, laquelle vis peut s'engager dans un trou conique (10) de la pièce intermédiaire (6), ladite pièce intermédiaire (6) étant munie d'un raccord à vis (5) orienté dans l'axe de rotation de la machine pour la fixation d'un outil de fraisage (14), caractérisé en ce que la pièce intermédiaire (6) sépare l'outil de fraisage (14) du porte-outil (2), en ce que la pièce intermédiaire (6) est allongée et possède un diamètre, à l'extrémité faisant face à l'outil de fraisage (14), qui est égal ou inférieur au diamètre de l'outil de fraisage (14), alors qu'à l'extrémité de la pièce intermédiaire (6) faisant face à l'outil de fraisage (14) sont prévues au moins trois saillies (7) dirigées radialement, conformées en coin dans la direction axiale, lesquelles saillies sont disposées symétriquement autour de l'axe de rotation (9), et qui peuvent s'engager dans un nombre correspondant de rainures de clavettes (8) formées axialement en coin à une extrémité de l'outil de fraisage (14), et dans lequel les surfaces extrêmes de l'outil de fraisage, faisant face à la pièce intermédiaire, sont en butée avec des surfaces de la pièce intermédiaire.

2. Système d'outil (1) selon la revendication 1, caractérisé en ce que l'angle compris entre les surfaces qui forment mutuellement la forme en coin sur les saillies de la pièce intermédiaire et dans les rainures de clavettes de l'outil de fraisage est compris dans l'intervalle de 2 - 10°.

3. Système d'outil selon la revendication 1 ou 2, caractérisé en ce que la pièce intermédiaire (6) est munie de trois saillies (7) s'étendant vers l'extérieur et disposées de manière cruciforme, et en ce que l'outil de fraisage (14) est muni d'un nombre de rainures de clavettes (8) disposées de manière cruciforme, qui correspond aux saillies (7).

4. Système d'outil (1) selon l'une des revendications 1 à 3, caractérisé en ce que l'extrémité de la pièce intermédiaire (6) faisant face à l'outil de fraisage (14) est munie de canaux d'évacuation de copeaux qui sont disposés symétriquement autour de l'axe de rotation (9).

5. Système d'outil (1) selon l'une des revendications 1 à 4, caractérisé en ce que le raccord à vis (5) entre la pièce intermédiaire (6) et l'outil de fraisage (14) comprend une vis située de manière à s'engager dans l'outil de fraisage (14), ladite vis ayant une tête configurée sous la forme d'un pignon conique qui est ou peut être engagé avec un second pignon conique disposé sur une première extrémité d'un palier qui est monté en rotation à l'intérieur de la pièce intermédiaire (6), et dans lequel l'autre extrémité du palier est configurée de manière à être actionnée par un outil de serrage.
